# EUROPÄISCHE PATENTSCHRIFT

(11) **EP 2 264 345 B1**
(45) Veröffentlichungstag und Bekanntmachung des Hinweises auf die Patenterteilung: **10.08.2011**
(21) Anmeldenummer: 09162698.6
(22) Anmeldetag: 15.06.2009
(51) Int. Cl.: F16K 31/50

(54) **Absperrventil**
Shut off valve
Soupape d'arrêt

(43) Veröffentlichungstag der Anmeldung: 22.12.2010
(73) Patentinhaber: Stanic, Miodrag, 11070 Beograd (RS); Stanic, Milos, 11070 Beograd (RS)
(72) Erfinder: Stanic, Miodrag, 11070 Beograd (RS); Stanic, Milos, 11070 Beograd (RS)
(74) Vertreter: Hohgardt, Martin

(56) Entgegenhaltungen:
- EP-A- 2 020 543
- WO-A-01/71227
- DE-U1- 20 315 221
- US-A1- 2005 173 667

## Beschreibung

Die vorliegende Erfindung betrifft ein Absperrventil für Fluide aufweisend ein Ventilgehäuse, einen Ventilkolben und einen den Ventilkolben aufnehmenden Kolbenträger, wobei der Kolbenträger mittels einer Spindel axial in dem Ventilgehäuse verschiebbar ist, wobei zumindest das Ventilgehäuse und der Kolbenträger aus Kunststoff bestehen und wobei der Kolbenträger derart die Innenwand des Ventilgehäuses kontaktiert, dass er bei Überschreiten eines bestimmten Drehmoments eine radiale Bewegung ausführt.

Derartige gattungsgemäße Absperrventile werden für gewöhnlich zur Regulierung der Durchflussmenge von Fluiden verwendet. Solche Absperrventile werden zum Beispiel in Wasserhähne eingebaut, um es dem Anwender zu ermöglichen, den Wasserdurchfluss wie gewünscht zu regulieren oder ganz zu unterbinden.

Bei einem derartigen Absperrventil wird der Ventilkolben in dem Ventilgehäuse mittels der Spindel in axialer Richtung bewegt um das Absperrventil zu schließen oder zu öffnen. Im geschlossenem Zustand des Absperrventils verschließt ein Ende des Ventilkolbens eine Öffnung des Absperrventils, so dass ein Fluid am Durchströmen des Absperrventils gehindert wird. Im geöffneten Zustand des Absperrventils ist das Ende des Ventilkolbens von der Öffnung beabstandet, so dass das Fluid das Absperrventil durchströmen kann. Dabei ist der Abstand zwischen dem Ende des Ventilkolbens und der Öffnung dann am größten, wenn das Absperrventil vollständig geöffnet ist. Die Öffnung kann beispielsweise in dem Ventilgehäuse angeordnet sein. In einer alternative Ausführungsform weist das Absperrventil auch einen Ventilsitz auf, in dem die Öffnung angeordnet ist. Die Spindel ist zumindest teilweise in dem Absperrventil angeordnet und drehbar gelagert. Die Spindel kontaktiert an einem Ende den Kolbenträger, durch den der Ventilkolben verschiebbar angeordnet ist. Durch Drehen der Spindel bewegt sich der Kolbenträger und damit der Ventilkolben in dem Ventilgehäuse vor bzw. zurück. An dem anderen Ende der Spindel kann ein Knauf befestigt werden, welcher das von einem Benutzer ausgeübte Drehmoment auf die Spindel überträgt.

Zumindest das Ventilgehäuse und der Kolbenträger der oben beschriebenen Absperrventile sind aus Kunststoff gefertigt. Dies hat gegenüber aus Messing gefertigten Absperrventilen den Vorteil, dass sie sich relativ kostengünstig herstellen lassen, da Kunststoff relativ billig ist und sich einfach - zum Beispiel im Spritzgussverfahren - verarbeiten lässt. Kunststoff hat außerdem den Vorteil, dass er nicht korrodiert, was die Haltbarkeit derartiger Absperrventile wesentlich erhöht und ihre Wartungsintervalle verlängert. Schließlich besitzt Kunststoff eine geringere Dichte als Messing, wodurch Absperrventile mit Komponenten aus Kunststoff wesentlich leichter sind als solche aus Messing.

Ein solches Absperrventil ist aus dem Dokument EP 2 020 543 bekannt.

Im Allgemeinen können Absperrventile durch den Anwender beim Auf und Zudrehen relativ leicht unbeabsichtigt beschädigt werden. Insbesondere beim Schließen des Absperrventils sind Anwender es gewohnt, diese mit einem relativ hohen Drehmoment zu schließen, um sicher zu gehen, dass kein Wasser unbeabsichtigt durch den Wasserhahn läuft. Hierbei kann ein Absperrventil leicht "überdreht" werden, so dass die oben beschriebene Mechanik eines solchen Absperrventils irreparabel beschädigt wird und das Absperrventil ausgetauscht werden muss. Darüber hinaus resultieren hohe Drehmomente in starken Kräften, welche auf die Dichtungen wirken und diese verformen oder sogar beschädigen können, so dass die Dichtigkeit des Absperrventils beeinträchtigt wird. Dieses Problem ist insbesondere an der Dichtung gegeben, welche zwischen dem Ende des Ventilkolbens und der zu schließenden Öffnung angeordnet ist.

Deshalb weisen die oben beschriebenen Absperrventile aus Kunststoff einen Mechanismus zwischen den drehbaren Teilen des Absperrventils auf, durch den das auf die Mechanik des Absperrventils wirkende Drehmoment begrenzt wird. Dieser Mechanismus wird beispielsweise dadurch realisiert, dass der Kolbenträger die Innenwand des Ventilgehäuses derart kontaktiert, dass der Kolbenträger beim Überschreiten eines bestimmten Drehmoments eine radiale Bewegung ausführt. Übt der Anwender auf die Spindel eines solchen Absperrventils ein höheres Drehmoment aus als werksseitig durch Auslegung des Mechanismus vorgegeben, so dreht sich der an die Spindel montierte Knauf weiter, ohne dass die Mechanik des Absperrventils Schaden nimmt. Ein derartiger Mechanismus verhindert daher eine irreversible Beschädigung des Absperrventils beim Gebrauch. Da beim Ausüben eines hohen Drehmoments der Kolbenträger im Ventilgehäuse rutscht, wird ein derartiger Mechanismus auch als Rutschkupplung bezeichnet.

Unter den zahlreichen Vorteilen gattungsgemäßer Absperrventile ist also vor allem hervorzuheben, dass sie haltbarer, wartungsfreier und kostengünstiger herzustellen sind als solche aus Messing ohne Rutschkupplung.

Derartige gattungsgemäße Absperrventile haben jedoch den Nachteil, dass der Teil der Spindel, welcher aus dem Ventilgehäuse herausragt und an welchem der Knauf befestigt ist, dem Anwender aufgrund des sichtbaren Kunststoffs einen minderwertigen Eindruck des Absperrventils vermittelt. Darüber hinaus sind die auf dem Markt befindlichen Knäufe für Messingspindeln ausgelegt. Da Kunststoff in der Regel weicher ist als Messing, kommt es an der Spindel zur Abnutzung. Im schlimmsten Fall wird die Spindel so weit beschädigt, dass der Knauf "durchdreht" oder keinen Halt mehr an der Spindel hat.

Aufgabe der vorliegenden Erfindung ist es daher, die aus dem Stand der Technik bekannten Absperrventile aus Kunststoff mit Rutschkupplung dahingehend zu verbessern, dass die oben genannten Nachteile beseitigt werden. Erfindungsgemäß wird diese Aufgabe gelöst durch ein Absperrventil gemäß Anspruch 1. Vorteilhafte Weiterbildungen ergeben sich aus den Unteransprüchen.

Das erfindungsgemäße Absperrventil weist ein Ventilgehäuse, einen Ventilkolben und einen den Ventilkolben aufnehmenden Kolbenträger auf, welcher mittels einer Spindel axial in dem Ventilgehäuse verschiebbar ist, wobei zumindest das Ventilgehäuse und der Kolbenträger aus Kunststoff bestehen und wobei der Kolbenträger derart die Innenwand des Ventilgehäuses kontaktiert, dass er bei Überschreiten eines bestimmten Drehmoments eine radiale Bewegung ausführt. Erfindungsgemäß besteht die Spindel aus zwei Teilen, wobei das erste Teil zumindest teilweise aus dem Ventilgehäuse herausragt und aus Messing besteht, und das zweite Teil den Kolbenträger in dem Ventilgehäuse kontaktiert und aus Kunststoff besteht. Die beiden Teile sind derart miteinander verbunden, dass sie sich nicht gegeneinander verdrehen lassen.

Erfindungsgemäß sind zumindest das Ventilgehäuse, der Kolbenträger und das erste Teil der Spindel des erfindungsgemäßen Absperrventils aus Kunststoff gefertigt. Kunststoff ist ein kostengünstiger Werkstoff und lässt sich relativ leicht zum Beispiel in Spritzgusstechnik verarbeiten. Gegenüber Messing besitzt Kunststoff den Vorteil, dass er nicht korrodiert. Darüber hinaus hat Kunststoff eine gegenüber Messing niedrigere Dichte, was das Gewicht des erfindungsgemäßen Absperrventils erheblich reduziert.

Bei dem erfindungsgemäßen Absperrventil kontaktiert der Kolbenträger die Innenwand des Ventilgehäuses derart, dass er bei Überschreiten eines bestimmten Drehmoments eine radiale Bewegung ausführt. Die Größe des Drehmoments, ab welcher der Kolbenträger diese radiale Bewegung ausführt, kann der Hersteller durch Auslegung der Kontaktfläche zwischen Kolbenträger und Ventilgehäuse vorgeben. Das Zusammenspiel des Kolbenträgers und der Innenwand des Ventilgehäuses erfolgt in der Art einer Rutschkupplung, welche das auf die Mechanik des Absperrventils wirkende Drehmoment und damit die in der Mechanik wirkenden Kräfte begrenzt. Ein "Überdrehen" des Absperrventils und eine damit einhergehende Beschädigung werden wirksam verhindert.

Die Spindel des erfindungsgemäßen Absperrventils weist zwei Teile auf. Dabei ist das erste Teil der Spindel, welches durch eine Öffnung des Ventilgehäuses aus dem Ventilgehäuse herausragt, aus Messing gefertigt. Messing ist im Allgemeinen härter als Kunststoff, weshalb beim Anbringen eines Knaufes, welcher für das härtere Material Messing vorgesehen ist, eine Spindel, welche vollständig aus Kunststoff bestünde, beschädigt werden könnte. Eine vollständig aus Kunststoff gefertigte Spindel könnte sich soweit abnutzen, dass der Knauf an der Spindel keinen ausreichenden Halt findet und "durchdreht". Einige handelsübliche Knäufe werden zusätzlich mit einer Schraube aus Metall an der Spindel fixiert. Bei einer vollständig aus Kunststoff bestehenden Spindel könnte diese beim Festdrehen der Schraube erheblich beschädigt und deformiert werden, so dass der Knauf nicht wie gewünscht an der Spindel fixiert wird. Da der aus dem Ventilgehäuse hervorragende erste Teil der Spindel aus Messing gefertigt ist, macht das Absperrventil als ganzes einen höherwertigen Eindruck, insbesondere, weil im Allgemeinen von dem gesamten Absperrventil im Wesentlichen nur dieses aus Messing gefertigte erste Teil der Spindel zu sehen ist, wenn das Absperrventil zum Beispiel in einem Wasserhahn verbaut ist.

Das zweite Teil der Spindel, welches den Kolbenträger in dem Gehäuse kontaktiert, besteht aus Kunststoff. Daher bestehen sowohl das Teil der Spindel, welches den Kolbenträger kontaktiert, als auch der Kolbenträger selbst aus demselben Material. Hierdurch wird eine Abnutzung vermieden, welche entstehen könnte, wenn der Kolbenträger und das zweite Teil der Spindel aus unterschiedlich harten Materialien bestünden.

Erfindungsgemäß bestehen daher das Ventilgehäuse, der Kolbenträger und das zweite Teil der Spindel aus Kunststoff und ergeben zusammen mit der Rutschkupplung ein haltbares, wartungsarmes und kostengünstig herzustellendes Absperrventil. Gleichzeitig lässt sich an dem aus Messing gefertigten ersten Teil der Spindel, welches durch die Öffnung des Ventilgehäuses aus dem Ventilgehäuse herausragt, ein Knauf anbringen, ohne dass es zu einer Beschädigung der Spindel kommen kann. Darüber hinaus vermittelt das durch die Öffnung des Ventilgehäuses aus dem Ventilgehäuse herausragende erste Teil der Spindel einen hochwertigen Gesamteindruck des Absperrventils. Nach außen hin lässt sich das erfindungsgemäße Absperrventil also wie ein konventionelles Absperrventil aus Messing handhaben, weist gleichzeitig aber alle Vorteile eines Absperrventils aus Kunststoff mit Rutschkupplung auf.

Gemäß einer weiteren vorteilhaften Weiterbildung des Absperrventils ist die Verbindung des ersten Teils und des zweiten Teils der Spindel als Nut-Feder-Verbindung ausgeführt. Die Teile für eine derartige Verbindung sind einfach - zum Beispiel im Spritzgussverfahren bzw. durch Fräsen - herzustellen. Darüber hinaus lassen sich die beiden Teile bei der Fertigung der Spindel einfach durch Ineinanderstecken verbinden.

Gemäß einer weiteren vorteilhaften Weiterbildung des Absperrventils weist das Absperrventil einen Ventilsitz auf, auf welchen ein Ende des Ventilkolbens absenkbar ist. Wenn das Ende des Ventilkolbens auf den Ventilsitz abgesenkt wird, so fließt durch den Ventilsitz und damit durch das Absperrventil im geschlossenen Zustand kein Fluid.

Gemäß einer weiteren vorteilhaften Weiterbildung des Absperrventils weist der Ventilsitz vier Auslassöffnungen auf. Diese Anzahl von Auslassöffnungen erzeugt beim Strömen des Fluids die geringsten Turbulenzen und damit die geringste Geräuschentwicklung.

Gemäß einer weiteren vorteilhaften Weiterbildung des Absperrventils ist an dem Ventilsitz ein Siebträger angeordnet, welcher mit dem Ventilsitz über eine Schnappverbindung verbunden ist. Ein derartiges Sieb verhindert das Eindringen von größeren Schwebeteilchen in das Ventil, welche in dem Fluid eventuell mitgeführt werden. Derartige Schwebeteilchen könnten sich zwischen dem Ende des Ventilkolbens und den Ventilsitz festsetzen und ein Schließen des Absperrventils verhindern, wodurch es unbrauchbar würde. Die Schnappverbindung verhindert, dass der Siebträger sich bei der Montage des Absperrventils unbeabsichtigt von dem Ventilsitz löst und zum Beispiel in einem Wasserhahn verkantet.

Gemäß einer weiteren vorteilhaften Weiterbildung des Absperrventils sind an dem Ventilkolben parallel zu dessen Längsachse Rippen angeordnet. Mit Hilfe derartiger Rippen wird ein Vibrieren des Ventilkolbens beim Fließen von Fluid verhindert. Ein derartiges Vibrieren des Ventilkolbens ist unerwünscht, da es unangenehme Geräusche verursacht, wenn das Absperrventil geöffnet ist und darüber hinaus die Lebensdauer das Absperrventils verringert.

Gemäß einer weiteren vorteilhaften Weiterbildung des Absperrventils weist das Ventilgehäuse eine Öffnung auf, an der Zungen ausgebildet sind, welche derart elastisch sind, dass die Spindel beim Zusammenbau zumindest teilweise durch die Öffnung des Ventilgehäuses geschoben werden kann. Im eingeschobenen Zustand der Spindel wirken die Zungen mit einem umlaufenden Vorsprung an der Spindel derart zusammen, dass eine axiale Bewegung der Spindel in das Ventilgehäuse hinein verhindert wird, d.h. die Spindel wird in axialer Richtung auf einfache Art und Weise fixiert. Durch das einfache Zusammenwirken der Zungen mit dem umlaufenden Vorsprung entfällt das externe Fixieren der Spindel zum Beispiel durch einen Sicherungs- oder Nutenring. Dies Vereinfacht den Zusammenbau des Absperrventils. Darüber hinaus verschleißt das Ventilgehäuse aus Kunststoff nicht durch die Reibung eines härteren Sicherungs- oder Nutenrings aus Metall.

Gemäß einer weiteren vorteilhaften Weiterbildung des Absperrventils weist der Kolbenträger außenwandige Vorsprünge auf, die in zugeordneten Ausnehmungen in der Innenwand des Ventilgehäuses axial gleiten, d.h. die Vorsprünge bewegen sich in den Ausnehmungen in axialer Richtung vor und zurück. Bei Überschreiten des bestimmten Drehmoments werden die Vorsprünge jeweils von der derzeitigen Ausnehmung zu einer benachbarten Ausnehmung bewegt, wodurch auf einfache Weise eine Rutschkupplung zwischen dem Kolbenträger und der Innenwand des Ventilgehäuses realisiert wird.

Gemäß einer weiteren vorteilhaften Weiterbildung des Absperrventils weist die Spindel mindestens einen Vorsprung auf, welcher zusammen mit mindestens einem entsprechenden Vorsprung an dem Kolbenträger verursacht, dass sich der Kolbenträger mit der Spindel mitdreht, wenn der Kolbenträger sich in einer Endstellung befindet. Durch die Vorsprünge wird gewährleistet, dass der Kolbenträger von einer axialen in eine radiale Bewegung übergeht, wenn er in einer Endstellung angelangt ist, d.h. wenn das Absperrventil vollständig geöffnet oder vollständig geschlossen ist.

Weitere Vorteile der Erfindung werden in der nachfolgenden detaillierten Beschreibung ersichtlich, in welcher die Erfindung anhand der Figuren erläutert wird.

In den Figuren zeigt:
- Fig. 1: einen Querschnitt durch ein Ausführungsbeispiel eines erfindungs- gemäßen Absperrventils
- Fig. 2: eine Ansicht des ersten Teils der Spindel des Ausführungsbeispiels von Fig. 1
- Fig. 3: eine Ansicht des zweiten Teils der Spindel des Ausführungsbei- spiels von Fig. 1
- Fig. 4: einen teilweisen Querschnitt durch den Kolbenträger des Ausfüh- rungsbeispiels von Fig. 1
- Fig. 5: einen Querschnitt durch das Ventilgehäuse des Ausführungsbei- spiels von Fig. 1

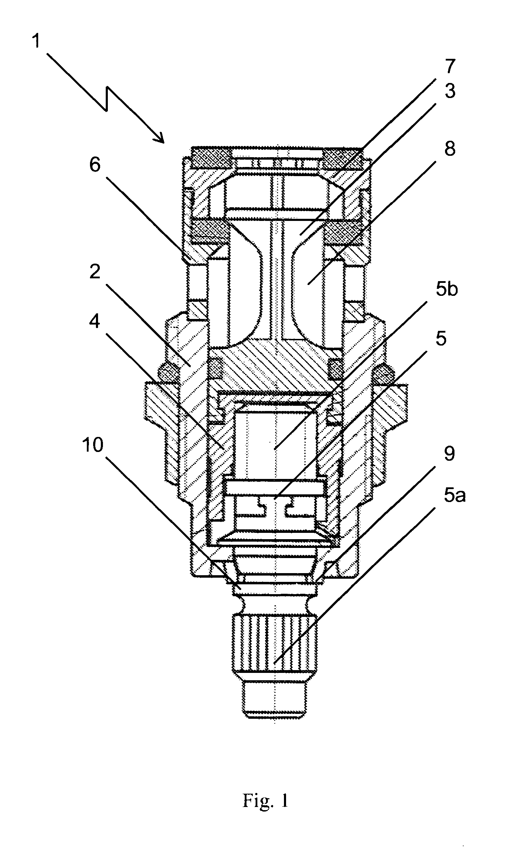

Ein Ausführungsbeispiel eines erfindungsgemäßen Absperrventils 1 ist in Fig. 1 im Querschnitt gezeigt. Das Absperrventil 1 weist ein Ventilgehäuse 2 auf. Dieses Ventilgehäuse 2 ist erfindungsgemäß aus Kunststoff gefertigt. In dem Ventilgehäuse 2 sind ein Ventilkolben 3 und ein Kolbenträger 4 angeordnet. Der Kolbenträger 4 ist so ausgestaltet, dass er den Ventilkolben 3 aufnehmen kann. Bei dem in Fig. 1 gezeigten Ausführungsbeispiel erfolgt diese Aufnahme mittels einer formschlüssigen Verbindung. Dazu ist der Kolbenträger 4 an der dem Ventilkolben 3 zugewandten Seite kranzförmig ausgebildet. Der Ventilkolben weist an der dem Kolbenträger 4 zugewandten Seite eine diesem Kranz entsprechende halbkreisförmige Aufnahme auf, welche über den Kranz geschoben wird. Dadurch wird eine in axialer Richtung belastbare Verbindung zwischen Kolbenträger 4 und Ventilkolben 3 geschaffen. Der Kolbenträger 4 ist wie das Ventilgehäuse 1 aus Kunststoff gefertigt.

Der Ventilkolben 3 weist bei dem in Fig. 1 gezeigten Ausführungsbeispiel Rippen 8 auf. Diese Rippen sind in axialer Richtung an dem Ventilkolben 3 angeordnet und verhindern, dass der Ventilkolben 3 vibriert, wenn er von Fluid umströmt wird. Hierdurch wird die Lebensdauer des Absperrventils 1 erhöht, denn Vibrationen können zu Beschädigungen an dem Absperrventil 1 führen. Außerdem werden die Strömungsgeräusche bei geöffnetem Absperrventil 1 reduziert.

Das Ventilgehäuse 2 weist ferner eine Spindel 5 auf. Diese besteht erfindungsgemäß aus zwei Teilen 5a und 5b. Das erste Teil 5a der Spindel ragt aus dem Ventilgehäuse 1 heraus und ist drehbar in dem Ventilgehäuse 1 gelagert. Dazu weist das Ventilgehäuse 1 eine Öffnung auf, welche in Form von Zungen 9 ausgebildet ist und die derart elastisch sind, dass die Spindel 5 beim Zusammenbau zumindest teilweise durch die Öffnung geschoben werden kann. Das erste Teil der Spindel 5a weist in diesem Ausführungsbeispiel einen umlaufenden Vorsprung 10 auf. Beim Zusammenbau "schnappen" die Zungen 9 hinter dem Vorsprung 10 zusammen, so dass die Spindel 5 axial fixiert wird, d.h. eine axiale Bewegung der Spindel 5 in das Ventilgehäuse 2 hinein oder aus dem Ventilgehäuse 2 heraus wird verhindert. Eine Drehbewegung der Spindel 5 ist jedoch ohne weiteres möglich. An dem ersten Teils der Spindel 5a lässt sich ein Knauf befestigen. Der Anwender kann durch Drehen des Knaufes das Absperrventil 1 öffnen und schließen. Das erste Teil der Spindel 5a ist aus Messing gefertigt, so dass Knäufe verwendet werden können, welche üblicherweise für Absperrventile aus Messing vorgesehen sind.

Das erste Teil der Spindel 5a ist mit dem zweiten Teil der Spindel 5b derart verbunden, dass sie sich nicht gegeneinander verdrehen lassen. Bei dem in Fig. 1 gezeigten Ausführungsbeispiel erfolgt diese Verbindung mittels einer Nut-Feder-Verbindung, wobei die Nut auf dem zweiten Teil der Spindel 5b und die Feder auf dem ersten Teil 5a angeordnet ist. Dem Fachmann sind allerdings eine Vielzahl anderer Mittel bekannt, mit denen die beiden Teile verbunden werden können. Das zweite Teil der Spindel 5b weist ein Außengewinde auf, welches in ein Innengewinde des Kolbenträgers 4 so eingreift, dass eine Drehung der Spindel 5 zu einer axialen Verschiebung des Kolbenträgers 4 in dem Ventilgehäuse 2 führt. Um ein Mitdrehen des Kolbenträgers 4 zu verhindern und gleichzeitig das auf den Kolbenträger 4 wirkende Drehmoment zu begrenzen, ist zwischen dem Kolbenträger 4 und der Innenwand des Ventilgehäuses 2 eine Rutschkupplung vorgesehen. Diese ist in dem in Fig. 1 gezeigten Ausführungsbeispiel derart ausgestaltet, dass der Kolbenträger 4 außenwandig Vorsprünge 11 aufweist, welche in zugeordneten Ausnehmungen 12 in der Innenwand des Ventilgehäuses 2 axial gleiten, d.h. sich in axialer Richtung vor und zurück bewegen. Bei Überschreiten eines bestimmten Drehmoments werden die Vorsprünge 11 jeweils von der derzeitigen Ausnehmung zu einer benachbarten Ausnehmung bewegt, so dass der Kolbenträger 4 eine radiale Bewegung ausführt. Auf diese Weise wird das Drehmoment, welches auf den Kolbenträger 4 wirkt, in der Art einer Rutschkupplung begrenzt. Das in Fig. 1 gezeigt Ausführungsbeispiel des erfindungsgemäßen Absperrventils weist fernen einen Ventilsitz 6 auf. Dieser sitzt auf dem Ventilgehäuse und weist eine mit einer Dichtung versehene Öffnung auf, durch welche ein Ende des Ventilkolbens 3 ragt. Im geschlossenen Zustand des Absperrventils 1 sitzt das Ende des Ventilkolbens 3 passgenau auf der Öffnung des Ventilsitzes 6, so dass kein Fluid durch die Öffnung und damit durch das Absperrventil 1 strömen kann. Dreht der Anwender über den an der Spindel 5 angebrachten Knauf die Spindel 5, so wird diese Drehbewegung durch das Zusammenspiel der Spindel 5, des Kolbenträgers 4 und des Ventilgehäuses 1 in eine axiale Bewegung des Kolbenträgers 4 relativ zu dem Ventilgehäuse 2 überführt. Dadurch bewegt sich auch der an dem Kolbenträger 4 angebrachte Ventilkolben 3 in axialer Richtung und das Ende des Ventilkolbens 3 wird von der Öffnung des Ventilsitzes 6 abgehoben, so dass ein Spalt zwischen der Öffnung und dem Ende des Ventilkolbens 3 entsteht. Durch diesen Spalt kann Fluid durch das Absperrventil 1 fließen. Das Fluid verlässt des Absperrventil 1 durch die Auslassöffnungen in dem Ventilsitz 6. Dabei haben sich vier Auslassöffnungen in dem Ventilsitz 6 als besonders vorteilhaft hinsichtlich der Entstehung von Turbulenz und damit verbundenen Strömungsgeräuschen erwiesen. In dem Ausführungsbeispiel von Fig. 1 ist der Ventilsitz 6 als separates Element ausgeführt. Der Fachmann weiß jedoch, dass der Ventilsitz 6 auch integral mit dem Ventilgehäuse 2 sein kann.

Bei dem in Fig. 1 gezeigten Ausführungsbeispiel ist auf dem Ventilsitz 6 ein Sieb 7 angeordnet, welches verhindert, dass grobe Schwebeteilchen in das Absperrventil 1 gelangen und dessen Funktion beeinträchtigen. Insbesondere wird so verhindert, dass sich der Spalt zwischen dem Ende des Ventilkolbens 3 und dem Ventilsitz 6 mit Schwebeteilchen zusetzt und sich das Absperrventil 1 nicht mehr richtig schließt. In dem Ausführungsbeispiel ist das Sieb 7 mit dem Ventilsitz 6 über eine Schnappverbindung verbunden, welche verhindert, dass sich das Sieb bei der Montage des Absperrventils 1 löst und zum Beispiel in einem Wasserhahn verkantet, in welchem das Absperrventil 1 montiert werden soll.

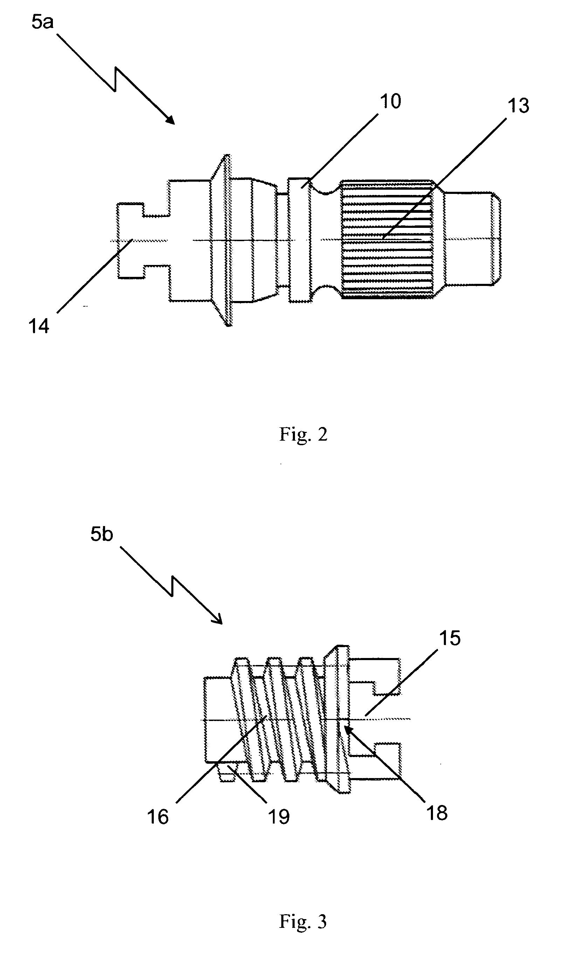

Fig. 2 zeigt das erste Teil der Spindel 5a des in Fig. 1 im Ganzen gezeigten Ausführungsbeispiels des erfindungsgemäßen Absperrventils 1 im Detail. Das erste Teil der Spindel 5a weist einen umlaufenden Vorsprung 10 auf, welcher mit den Zungen 9 der Öffnung in dem Ventilgehäuse 2 derart zusammenwirkt, dass eine axiale Bewegung der Spindel 5 in das Ventilgehäuse 2 hinein verhindert wird. Das erste Teil der Spindel 5a ist aus Messing gefertigt, so dass an dem Ende 13 3 dieses Teils 5a, welches aus dem Ventilgehäuse 2 herausragt, ein gewöhnlicher Knauf befestigt werden kann, welcher für herkömmliche Absperrventile aus Messing geeignet ist. Insbesondere besteht bei Messing nicht die Gefahr, dass sich dieses Ende 13 des ersten Teils der Spindel 5a abnutzt und der Knauf "durchdreht". Der erste Teil der Spindel 5a weist an dem im Ventilgehäuse 2 angeordneten Ende eine Feder 14 in Form einer T-förmige Schiene auf, welche eine formschlüssige Verbindung mit einem entsprechenden Gegenstück 15 auf dem zweiten Teil der Spindel 5b ermöglicht. Die zwei Teile 5a, 5b können einfach durch Ineinanderschieben miteinander verbunden werden.

Fig. 3 zeigt das zweite Teil der Spindel 5b im Detail. An dem Ende des zweiten Teils der Spindel 5b, welches dem ersten Teil der Spindel 5a zugewandt ist, befindet sich eine Nut 15, in welche die Feder 14 in Form einer T-förmigen Schiene des ersten Teils der Spindel 5a eingreift, um eine formschlüssige Verbindung herzustellen. In Fig. 3 ist außerdem das Gewinde 16 des zweiten Teils der Spindel 5b gezeigt, welches in ein entsprechendes Gewinde 17 des Kolbenträgers 4 eingreift, und eine Drehbewegung der Spindel 5 in eine axiale Bewegung des Kolbenträgers 4 transformiert.

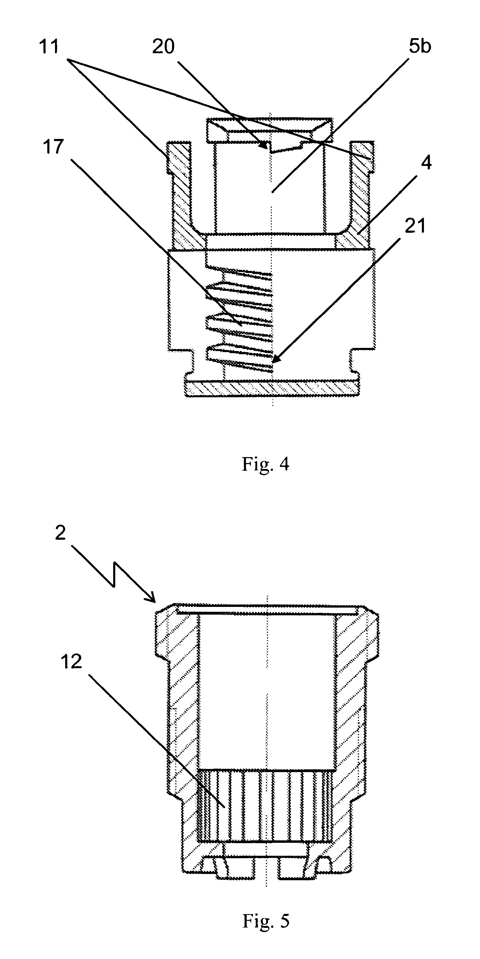

Das zweite Teil der Spindel 5b weist in dem Ausführungsbeispiel einen Vorsprung 18 auf, und der Kolbenträger einen entsprechenden Vorsprung 20. Ein Vorsprung ist in diesem Zusammenhang jegliches Mittel, welches von einem Rest hervorsteht. Dabei kann der Vorsprung auch mit Hilfe von Ausnehmungen gebildet werden. In einer ersten Endstellung ist die Spindel 5 möglichst weit aus dem Kolbenträger 4 herausgeschraubt. In diesem Fall stößt die vorspringende Kante 18 an der Spindel 5 gegen eine entsprechende vorspringende Kante 20 (vgl. Fig. 4) an dem Kolbenträger 4. Dies führt dazu, dass die Spindel nicht weiter aus dem Kolbenträger heraus geschraubt werden kann. Statt dessen dreht sich der Kolbenträger 4 mit der Spindel 5 mit.

Entsprechende Mittel gibt es in dem vorliegenden Ausführungsbeispiel auch an anderen Stellen der Spindel 5 und des Kolbenträgers 4. Mit diesen Mitteln wird ein Übergang von einer axialen Bewegung des Kolbenträgers 4 in eine radiale Bewegung erzielt, wenn die Spindel 5 möglichst weit in den Kolbenträger 4 hineingeschraubt ist. In diesem Beispiel ist das Mittel bzw. der Vorsprung an der Spindel 5 das Ende 19 des vorspringenden Teils des Gewindes der Spindel. In der hineingeschraubten Position stößt dieses Ende gegen ein Teil 21 (vgl. Fig. 4) des Kolbenträgers 4. Dieses Teil 21 kann ein Vorsprung sein oder einfach das Ende des Innengewindes in dem Kolbenträger 4. Die radiale Bewegung des Kolbenträgers 4 wird durch die bereits beschriebene Rutschkupplung ermöglicht. Fig. 4 zeigt den Kolbenträger 4 im Detail. Das Gewinde 16 des zweiten Teils der Spindel 5b greift in ein Innengewinde 17 in dem Kolbenträger 4 ein. Damit eine Drehbewegung der Spindel 5 in eine axiale Bewegung des Kolbenträgers 4 umgewandelt werden kann, muss verhindert werden, dass sich der Kolbenträger 4 mitdreht. Dies erfolgt in dem gezeigten Ausführungsbeispiel durch Vorsprünge 11 an dem Kolbenträger 4. Diese Vorsprünge 11 gleiten in entsprechende Vertiefungen 12 in der Innenwand des Ventilgehäuses 2 in axialer Richtung. Die Funktion der Rutschkupplung wird in dem gezeigten Ausführungsbeispiel erfüllt, indem bei Überschreiten eines bestimmten Drehmoments, die Vorsprünge 11 jeweils von einer derzeitigen Vertiefung zu einer benachbarten Vertiefung bewegt werden. Das heißt bei Überschreiten eines bestimmten Drehmoments dreht sich der Kolbenträger 4 mit, wodurch das Drehmoment begrenzt wird.

Fig. 5 zeigt das Ventilgehäuse 2 des in Fig. 1 gezeigten Ausführungsbeispiels im Detail. Insbesondere sind hier die Vertiefungen 12 zu erkennen, in welchen die Vorsprünge 11 an dem Kolbenträger 4 in axialer Richtung gleiten. Durch das Zusammenspiel von Spindel 5, Kolbenträger 4 und Ventilgehäuse 2 wird eine Drehung der Spindel 5 also in eine axiale Bewegung des Kolbenträgers 4 umgewandelt. Andererseits wird das Drehmoment begrenzt, indem der Kolbenträger 4 sich mitdreht, wenn ein bestimmtes Drehmoment überschritten wird. Durch diese Begrenzung werden Beschädigungen an dem Absperrventil, insbesondere an den Dichtungen wirksam vermieden.

## Patentansprüche

1. Absperrventil (1) aufweisend ein Ventilgehäuse (2), einen Ventilkolben (3) und einen den Ventilkolben (3) aufnehmenden Kolbenträger (4), wobei der Kolbenträger (4) mittels einer Spindel (5) axial in dem Ventilgehäuse (2) verschiebbar ist, wobei zumindest das Ventilgehäuse (2) und der Kolbenträger (4) aus Kunststoff bestehen und wobei der Kolbenträger (4) derart die Innenwand des Ventilgehäuses (1) kontaktiert, dass er bei Überschreiten eines bestimmten Drehmoments eine radiale Bewegung ausführt
**dadurch gekennzeichnet, dass**
die Spindel (5) aus zwei Teilen (5a, 5b) besteht, wobei das erste Teil (5a) zumindest teilweise aus dem Ventilgehäuse (2) herausragt und aus Messing besteht, und das zweite Teil (5b) den Kolbenträger (4) in dem Ventilgehäuse (2) kontaktiert und aus Kunststoff besteht und wobei die zwei Teile (5a, 5b) derart miteinander verbunden sind, dass sie sich nicht gegeneinander verdrehen lassen.

2. Absperrventil (1) nach Anspruch 1, **dadurch gekennzeichnet, dass** das erste Teil (5a) und das zweite Teil (5b) der Spindel (5) mittels einer Nut-Feder-Verbindung verbunden sind.

3. Absperrventil (1) nach einem der vorangehenden Ansprüche, **dadurch gekennzeichnet, dass** das Absperrventil (1) einen Ventilsitz (6) aufweist, auf welchen ein Ende des Ventilkolbens (3) absenkbar ist.

4. Absperrventil (1) nach Anspruch 3, **dadurch gekennzeichnet, dass** der Ventilsitz (6) vier Auslassöffnungen für Fluid aufweist.

5. Absperrventil (1) nach einem der Ansprüche 3 oder 4, **dadurch gekennzeichnet, dass** an dem Ventilsitz (6) ein Siebträger (7) angeordnet ist, welcher mit dem Ventilsitz (6) über eine Schnappverbindung verbunden ist.

6. Absperrventil (1) nach einem der vorangehenden Ansprüche, **dadurch gekennzeichnet, dass** an dem Ventilkolben (3) parallel zu dessen Längsachse Rippen (8) angeordnet sind.

7. Absperrventil (1) nach Anspruch 3, **dadurch gekennzeichnet, dass** das Ventilgehäuse (2) eine Öffnung aufweist, an der Zungen (9) ausgebildet sind, welche derart elastisch sind, dass die Spindel (5) beim Zusammenbau zumindest teilweise durch die Öffnung des Ventilgehäuses (1) geschoben werden kann und die Zungen (9) im eingeschobenen Zustand der Spindel (5) mit einem umlaufenden Vorsprung (10) an der Spindel (5) derart zusammenwirken, dass eine axiale Bewegung der Spindel (5) in das Ventilgehäuse (2) hinein verhindert wird.

8. Absperrventil (1) nach einem der vorangehenden Ansprüche, **dadurch gekennzeichnet, dass** der Kolbenträger (4) außenwandige Vorsprünge (11) aufweist, die in zugeordneten Ausnehmungen (12) in der Innenwand des Ventilgehäuses (2) axial gleiten und bei Überschreiten des bestimmten Drehmoments jeweils von der derzeitigen Ausnehmung zu einer benachbarten Ausnehmung bewegt werden.

9. Absperrventil (1) nach einem der vorangehenden Ansprüche, **dadurch gekennzeichnet, dass** die Spindel mindestens einen Vorsprung (18, 19) aufweist, welcher zusammen mit mindestens einem entsprechenden Vorsprung (20, 21) an dem Kolbenträger (4) verursacht, dass sich der Kolbenträger (4) mit der Spindel (5) mitdreht, wenn der Kolbenträger (4) sich in einer Endstellung befindet.

## Claims

1. Shut-off valve (i) comprising a valve housing (2), a valve piston (3) and a piston carrier (4) for accommodating the valve piston (3), wherein the valve carrier (4) is axially movable in the valve housing (2) by means of a spindle (5), wherein at least the valve housing (2) and the piston carrier (4) are made of plastic and wherein the piston carrier (4) contacts the inner wall of the valve housing (1), such that the piston carrier exhibits a radial movement when exceeding a certain torque
**characterized in that**
the spindle (5) consists of two parts (5a, 5b), wherein the first part (5a) protrudes at least partially from the valve housing (2) and consists of brass, and the second part (5b) contacts the piston carrier (4) in the housing and consists of plastic and wherein the two parts (5a, 5b) are connected with one another in such a manner that the parts are not rotatable against each other.

2. Shut-off valve (i) according to claim 1, **characterized in that** the first part (5a) and the second part (5b) of the spindle (5) are connected by means of tongue and grove.

3. Shut-off valve (1) according to any one of the preceding claims, **characterized in that** the shut-off valve (1) comprises a valve seat (6) onto which an end of the valve piston (3) can be lowered.

4. Shut-off valve (1) according to claim 3, **characterized in that** the valve seat (6) comprises four outlets for a fluid.

5. Shut-off valve (i) according to any one of claims 3 or 4, **characterized in that** a filter carrier (7) is arranged on the valve seat (6), which is connected with the valve seat (6) by means of a snap-on connection.

6. Shut-off valve (1) according to any one of the preceding claims, **characterized in that** fins (8) are arranged at the valve piston (3) parallel to its longitudinal axis.

7. Shut-off valve (i) according to claim 3, **characterized in that** the valve housing (2) comprises an opening on which tongues (9) are formed which are elastic, such that the spindle (5) may be moved at least partially through the opening of the valve housing (i), when assembling the valve, and the tongues (9) interact with a circumferential protrusion (10) on the spindle (5) in the inserted state of the spindle (5), such that an axial movement of the spindle (5) into the valve housing (2) is prevented.

8. Shut-off valve (i) according to any one of the preceding claims, **characterized in that** the piston carrier (4) comprises protrusions (11) at an outer wall of the piston carrier (4), which axially slide in assigned recesses (12) in the inner wall of the valve housing (2) and each of which is moved from a present recess to an adjacent recess when exceeding the certain torque.

9. Shut-off valve (1) according to any one of the preceding claims, **characterized in that** the spindle comprises at least a protrusion (18, 19), which together with at least one corresponding protrusion (20, 21) on the piston carrier (4) causes that the piston carrier (4) rotates with the spindle (5), when the piston carrier (4) is positioned in an end position.

## Revendications

1. Soupape d'arrêt (1) comportant un boîtier de soupape (2), un piston de soupape (3) et un porte-piston (4) recevant le piston de soupape (3), le porte-piston (4) pouvant coulisser axialement dans le boîtier de soupape (2) au moyen d'une broche (5), au moins le boîtier de soupape (2) et le porte-piston (4) étant réalisés en matière synthétique, et le porte-piston (4) étant en contact avec la paroi intérieure du boîtier de soupape (1) de façon à effectuer un déplacement radial en cas de dépassement d'un couple de rotation déterminé, **caractérisée en ce que** la broche (5) est constituée de deux parties (5a, 5b), la première partie (5a) sortant au moins partiellement du boîtier de soupape (2) et étant constituée de laiton, et la seconde partie (5b) étant en contact avec le porte-piston (4) dans le boîtier de soupape (2) et étant constituée de matière synthétique, et les deux parties (5a, 5b) étant reliées l'une à l'autre, de façon à ne pas pouvoir tourner l'une par rapport à l'autre.

2. Soupape d'arrêt (1) selon la revendication 1, **caractérisée en ce que** la première partie (5a) et la seconde partie (5b) de la broche (5) sont reliées au moyen d'un assemblage par rainure et languette.

3. Soupape d'arrêt (1) selon une des revendications précédentes, **caractérisée en ce que** la soupape d'arrêt (1) possède un siège de soupape (6) sur lequel une extrémité du piston de soupape (3) peut descendre.

4. Soupape d'arrêt (1) selon la revendication 3, **caractérisée en ce que** le siège de soupape (6) est pourvu de quatre orifices de sortie de fluide.

5. Soupape d'arrêt (1) selon une des revendications 3 ou 4, **caractérisée en ce que** sur le siège de soupape (6) est disposé un porte-tamis (7) qui est relié au siège de soupape (6) par l'intermédiaire d'une liaison emboîtée.

6. Soupape d'arrêt (1) selon une des revendications précédentes, **caractérisée en ce que** des nervures (8) sont disposées sur le piston de soupape (3) parallèlement à l'axe longitudinal de celui-ci.

7. Soupape d'arrêt (1) selon la revendication 3, **caractérisée en ce que** le boîtier de soupape (2) est pourvu d'une ouverture au niveau de laquelle sont conformées des languettes (9) qui sont élastiques, de sorte que, lors de l'assemblage, la broche (5) peut être engagée au moins partiellement à travers l'ouverture du boîtier de soupape (1) et que, une fois la broche (5) engagée, les languettes (9) coopèrent avec une saillie périphérique (10) de la broche (5), de façon à interdire tout déplacement axial de la broche (5) vers l'intérieur du boîtier de soupape (2).

8. Soupape d'arrêt (1) selon une des revendications précédentes, **caractérisée en ce que** le porte-piston (4) comporte des saillies de paroi extérieure (11) qui glissent axialement dans des évidements associés (12) de la paroi intérieure du boîtier de soupape (2) et, en cas de dépassement du couple de rotation déterminé, passent chacune de l'évidement où elles se trouvent à un évidement voisin.

9. Soupape d'arrêt (1) selon une des revendications précédentes, **caractérisée en ce que** la broche comporte au moins une saillie (18, 19) qui, conjointement avec au moins une saillie correspondante (20, 21) du porte-piston (4), fait en sorte que le porte-piston (4) tourne avec la broche (5) lorsque le porte-piston (4) se trouve dans une position extrême.
